# FASCICULE DE BREVET EUROPEEN

(11) **EP 1 425 711 B1**
(45) Date de publication et mention de la délivrance du brevet: **05.11.2008**
(21) Numéro de dépôt: 01974378.0
(22) Date de dépôt: 13.09.2001
(51) Int. Cl.: G06K 17/00

(54) **DISPOSITIF GARANTISSANT LE PROCESSUS DE TRACABILITE D'UN OBJET OU D'UN PRODUIT**
VORRICHTUNG ZUR ABSICHERUNG DER AUFFINDBARKEIT EINES GEGENSTANDES ODER PRODUKTES
DEVICE FOR GUARANTEEING TRACEABILITY PROCEDURE OF AN OBJECT OR OF A PRODUCT

(43) Date de publication de la demande: 09.06.2004
(73) Titulaire: ALPHACODE, 78114 Magny les Hameaux (FR)
(72) Inventeur: Rivailler Jacques, 78114 Magny les Hameaux (FR)
(74) Mandataire: Breese, Pierre
(86) Numéro de dépôt international: PCT/FR2001/002848
(87) Numéro de publication internationale: WO 2003/023703

(56) Documents cités:
- EP-A- 0 585 932
- EP-A- 1 076 313
- US-A- 5 768 384

## Description

### PRESENTATION

Le principe de traçabilité exige que l'on puisse retrouver à chaque instant les informations concernant la vie d'un objet ou d'un produit.

Le point de départ de la traçabilité est l'objet lui-même ou le produit étiqueté. II peut être de faibles dimensions et la surface utilisable est, de ce fait, souvent réduite.

Le problème consiste à placer sur l'objet le minimum d'informations pour occuper le minimum de place, et pouvoir néanmoins recréer la chaîne de la traçabilité de cet objet, avec tous les détails souhaités par les utilisateurs tant professionnels que consommateurs.

Visant cet objectif, on connaît le brevet français n° 00 03073. La présente demande du même auteur complète la précédente par l'adjonction d'un numéro chiffré en clair ou en caractères codés garantissant l'authenticité du marquage.

Il est connu également du document de brevet US 5,768,384 un système d'identification, authentification et traçage d'articles manufacturés. L'objet de ce brevet vise à améliorer l'identification de l'origine des articles afin de conserver un label de qualité et à tracer les articles entre leur lieu de fabrication et leur point de vente. Cependant aucun moyen pour diminuer la taille d'occupation des informations de traçage n'est évoqué dans ce document.

Pour résoudre ce problème d'occupation de place, l'invention fait intervenir au moins une extension d'information en liaison avec un identifiant de l'objet.
Plus précisément, la présente invention a pour objet un dispositif de traçage des caractéristiques des opérations effectuées sur des composants d'un objet ou produit tout au long de leur vie depuis l'origine, comportant un groupement particulier de dessins, d'écritures codées et d'images effectuées directement sur l'objet ou sur un support intermédiaire fixé à l'objet ou produit. Ce groupement compose un cadre de traçabilité comportant une zone de champs de caractères codés comportant un identifiant, assurant l'identification assurant l'identification unique du cadre de traçabilité et garantissant son rattachement à l'objet ou produit par des informations spécifiques à l'objet ou produit. Cet identifiant affecte à chaque cadre de traçabilité au moins une table d'extension d'informations propres à chaque domaine d'application et servant à expliciter les champs du cadre de traçabilité et à réduire les volumes d'informations à mémoriser sur l'objet.

Selon des modes de réalisation particuliers :
- le dispositif est solidaire physiquement de l'objet et visible de l'extérieur, se différencie d'un objet à un autre par au moins un nombre, et les écritures codées sont scellées, chiffrées et suffisamment contrastées pour être exploitées par un dispositif de saisie d'images ;
- le cadre de traçabilité comprend la juxtaposition de plusieurs zones de structure et de signification différentes, à savoir :
   - une zone destinée à l'opérateur comportant des écritures classiques et des dessins,
   - la zone de caractères codées destinée à l'acquisition automatique,
   - une zone de contrôle comportant des témoins relatifs à l'état de l'objet et des informations confidentielles ou d'utilisation particulière ;
- le nombre différenciant les objets est choisi entre une référence chiffrée propre à chaque cadre de traçabilité et un nombre incrémenté à chaque objet ;
   - la zone de caractères codés se compose de traceurs correspondant chacun à une ligne du cadre de traçabilité, chaque traceur précisant les caractéristiques d'une opération sur l'objet
   ou le produit et contenant les liens de recherche automatique par pointage sur une source d'informations extérieure au cadre de traçabilité via des moyens de transferts, servant à reconstituer de proche en proche l'arborescence de la vie de l'objet ou produit ;
   - le cadre de traçabilité est délimité par une enveloppe de forme et de type appropriés à son extraction d'une image complète de l'objet par traitement d'un signal d'image ;
   - le cadre de traçabilité contient au moins une clé qui permet son rattachement exclusif à un document d'accompagnement de l'objet ou du produit, le cadre et le document devenant ainsi indissociables pour garantir l'information associée à l'objet ou au produit.

### TERMINOLOGIE

### Traçabilité :

Ensemble de procédés servant à coder et à reconstituer de façon continue le schéma de vie d'un produit.

### Tiers Accord :

1- Du point de vue technique :
   Organisme chargé principalement de surveiller le respect des règles d'écriture des messages afin de garantir la cohérence et la compréhension constante des échanges. Il veille au respect de la mise en forme et du format des messages afin de garantir l'intégrité, la confidentialité et l'authenticité des informations utilisées par les opérateurs agréés.
   Il est garant de l'universalité et de la pérennité des échanges.
2- Du point de vue organisationnel :
   Le Tiers Accord est le représentant des utilisateurs. A ce titre, il procède ou il fait procéder à la promotion du système. Il fédère les utilisateurs et supervise le fonctionnement réglementaire de l'ensemble de la chaîne de traçabilité.

### Cadre de traçabilité :

Il est constitué d'une surface délimitée par une courbe fermée, dans laquelle se situent des informations alphanumériques et graphiques, et des caractères codés, notamment de type EOC ou DOT.

Le premier type d'informations est plus naturellement destiné à l'utilisateur humain, l'autre permet une saisie automatique à faible coût.

Le pourtour du cadre doit être « caractéristique », car il sert au repérage et à l'extraction du cadre du reste de l'image dans laquelle il est immergé au moment de l'acquisition de la scène.

*Enfin, il assure la visualisation de l'authentification de la traçabilité dont il permet de faire la mise en oeuvre. Il doit être porté par le produit.*

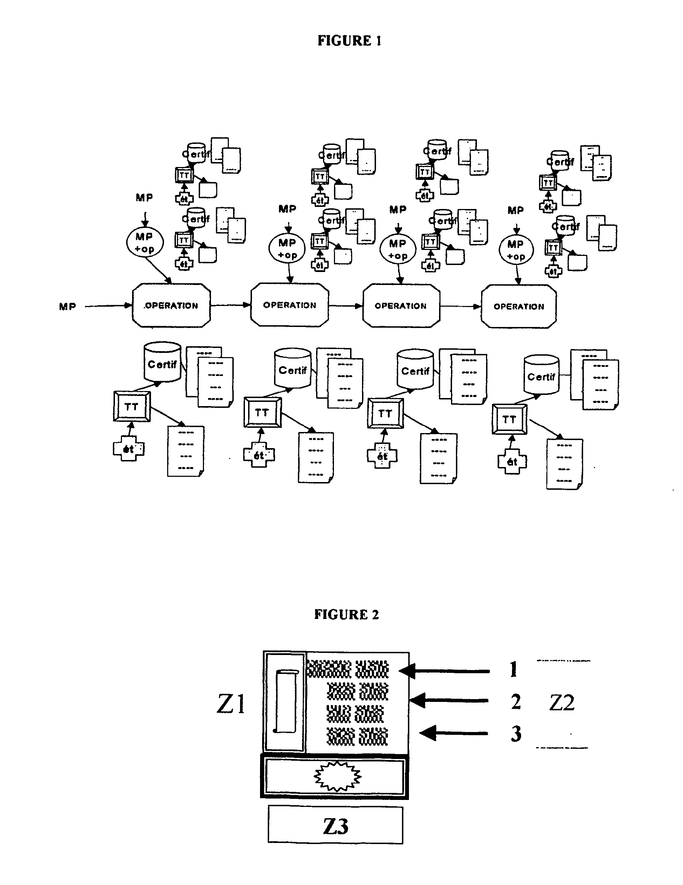

Outre son pourtour caractéristique (figure 2), le cadre de traçabilité (3) est constitué de la façon suivante :
1- le sous-ensemble Z1 est composé de caractères alphanumériques lisibles à l'oeil et destinés à tous les utilisateurs.
2- Le sous-ensemble Z2 constitué de caractères codés, notamment de type ECO, qui permettent de restituer le schéma de vie d'un produit, selon un procédé que nous décrivons ci-aprés. Il est lui-même composé de l'identifiant (partie 1 de la figure 2) et du ou des traceurs (lignes suivantes, partie 2). Généralement une ligne par traceur.
3- Le sous-ensemble de contrôle Z3 peut servir de témoin de situations réellement rencontrées par le produit (ex : témoin thermique de décongélation)

Autre exemple en Z3, certaines informations comme des clés peuvent être inscrites à l'aide d'encres sensibles à la température qui s'effacent si un seuil prédéterminé est atteint, bloquant toute lecture automatique ultérieure.

Le sous-ensemble Z3 peut contenir uns clé qui permet d'exploiter un document d'accompagnement de l'objet les rendant indissociables (sécurité d'affectation).

### Index:

Caractères Indicateurs de classe. Ils servent à identifier les champs du Cadre de traçabilité. Exemple, l'index date suivi des valeurs de celle-ci. L'index avec les valeurs constitue le champ date (voir champ). Ils permettent l'identification automatique des classes et pointent sur la table de traçab0ilité spécifiée ou la table intermédiaire si elle existe.

### Champ :

Un champ est composé d'un caractère index de spécification et d'octets (généralement sous forme de caractères ECO ou DOT) représentant les paramètres de quantification correspondants. Exemple, l'index pointe l'unité de mesure contenu dans la table de traçabilité. Si l'unité est le Kg et que l'octet suivant l'index est 2, le résultat explicité du champ sera : poids net 2 Kg (pour un champ composé de seulement 2 octets).

Un champ est une représentation physique générale d'une classe.

### Table de traçabilité :

Table qui fait correspondre à chaque champ du cadre de traçabilité, une chaîne de caractères alphanumériques, éventuellement des dessins, images, sons ou des caractères ECO ou DOT).

La Table de traçabilité explicite et complète la signification des caractères index des champs en fonction du domaine d'application.

Ces chaînes explicitent le contenu informatif à destination de l'utilisateur direct, sous forme d'écriture classique ou de dessins, de photographies, voire de sons. Ces informations sont pondérées par les caractères du champ qui suivent l'index et sont ainsi propres à chaque objet ou produit.
- Exemple: Soit un champ avec son index pointant sur la table de traçabilité. Les caractères ECO ou DOT (par exemple) du champ qui suivent physiquement le caractère index vont préciser les indications correspondantes de la table, pour fournir :

- L'essentiel des informations spécifiques à l'objet recherchées par l'usagé,
- les coordonnées par exemple, du ou des dépositaires d'informations propres au domaine d'application correspondant à la table (ex: règlement d'utilisation, données générales ...).

Chaque table démultiplie ainsi les indications du cadre de traçabilité et peut ouvrir sur l'extérieur de façon claire ou chiffrée. Dans ce dernier cas la clé publique peut être dans la zone de contrôle du cadre de traçabilité.

Chaque table correspond à un domaine particulier. Elle gagne à être standardisée.

L'index 4 de l'identifiant du cadre de traçabilité, propre à chaque objet, spécifie le type de table de traçabilité qui correspond au domaine d'application auquel appartient l'objet ou le produit.

### Table de traçabilité intermédiaire :

Table spécifique à certains produits ou certaines opérations. Elles personnalisent éventuellement la table de traçabilité associée.

### Lien :

Le lien est une fonction d'adressage qui permet d'établir les relations entre le cadre de traçabilité et les opérateurs successifs. Il permet de réduire, sur une «étiquette» par exemple, le nombre d'octets nécessaires à la restitution de la vie du produit tracé. Il permet de remonter dans l'arborescence de la vie d'un objet ou d'un produit sans surcharger le cadre de traçabilité.

La fonction lien est constituée des 2 octets référence fournisseur de l'index 2 des traceurs et les informations contenues dans la définition du lot (traceur d'opération page 9)

Cette fonction peut pointer sur plusieurs objectifs, par exemple : sur une table de traçabilité, un simple fichier ou une base de données en local ou via un réseau.

Le fichier peut être fourni avec le lot.

### Lien Sécurisé :

Lien dont l'écriture est garantie à l'aide d'un scellement informatique, généralement en fin de ligne.

### Classe:

Ensemble d'éléments (notamment de caractères ECO ou DOT) de même signification ; comme les octets caractérisants une date. Ces éléments sont initialisés par un index. Chaque classe commence par un index.

### Masque :

Le masque correspond à l'ensemble des caractéristiques propres à une table de traçabilité.

### Identifiant :

Partie 1 du sous-ensemble Z2 du cadre de traçabilité (fig2).

Il forme la première ligne de caractères ECO du cadre de traçabilité, dont il assure l'identification unique. Chaque cadre de traçabilité a donc, un identifiant différent des autres.

Il se compose généralement :
- d'un numéro d'identification unique,
- d'une date d'impression,
- du repérage du lieu d'élaboration
- de la filière ou domaine de l'objet ou du produit,
- du niveau du processus où se trouve le produit,
- de l'unité de mesure et de sa quantification, ou des principaux composants du produit,
- du scellement des informations du cadre de traçabilité (fonctions intégrité, authenticité).

Il peut comporter d'autres informations qui ont un aspect général, par opposition aux traceurs ou lignes suivantes qui correspondent à des opérations spécifiques s'enchaînant tout au long du processus d'élaboration du produit.

Le rôle essentiel de l'identifiant est :
- de garantir la sincérité du marquage donc de l'étiquetage,
- de désigner la table de traçabilité associée,
- de sécuriser le rattachement de l'étiquetage à l'objet support,
de façon décentralisée sans avoir nécessairement besoin d'une base de données en ligne.

### Traceur:

Le traceur constitue la partie 2 du sous-ensemble Z2 du cadre de traçabilité (figure 2). Il comprend plusieurs lignes de caractères ECO ou DOT, en général une par opération. Ces lignes servent à exploiter automatiquement les enregistrements de la table de traçabilité désignée par l'identifiant.

### Opération :

Nom générique qui désigne toute étape de production, transformation, transport, stockage, conservation et commercialisation liée à un produit au sens général (notion d'objet ou de vrac). Voir figure 1.

### Niveau ou étape :

Un niveau regroupe l'ensemble des opérations de même finalité correspondantes à un même lot.

### Lot :

Ensemble unitaire cohérent pris en compte en début ou en fin d'opération. La désignation du lot peut servir à expliciter sa composition.

Un lot peut varier considérablement d'une opération à l'autre. Un nombre de M lots en début d'opération peut se transformer en N lots à la fin. Le lot est une notion capitale en traçabilité.

A chaque lot peuvent être attachées des informations quantitatives et qualitatives permettant de mieux le définir.

Le champ correspondant au lot contient un lien qui permet de remonter aux lots «pères» et ainsi de suite.

### Chaîne :

Ensemble des opérations en cascade.

### Chaînage :

Ensemble des chaînes constituant la mise en oeuvre de la traçabilité d'un produit.

### Chaîne principale :

Chaîne aboutissant au consommateur à la façon de la partie principale d'une arrête de poisson.

### Chaîne secondaire :

Chaîne aboutissant à une opération d'une chaîne principale.

### Maillon :

Partie de chaîne correspondant à au moins une opération.

### Générateur de Cadre de traçabilité :

Progiciel d'élaboration du processus de la traçabilité et de sa sécurisation.

Il comprend principalement :
- Les programmes d'écriture et de lecture des codes ECO, DOT etc...,
- La table de traçabilité du domaine concerné,
- Les logiciels de saisie et d'exploitation correspondants,
- les clés de chiffrement et leur gestion, le cas échéant.
- les programmes d'installation et de paramètrisation en fonction du contexte de l'application.

### OPÉRATIONS GENERALES PRISES EN COMPTE LORS DE LA TRAÇABILITE.

### Certification :

Opération qui, conformément à une réglementation, aboutit à l'enregistrement de l'engagement moral d'un professionnel et la constatation de l'existence des moyens correspondants.

C'est la garantie morale.

### Contrôle :

Opération qui correspond à l'observation et la mesure dans des conditions spécifiées par des moyens appropriés, de la quantité et de la qualité des produits.

Le contrôle peut s'appliquer à des moyens de production, de transformation, de transport et de commercialisation.

C'est la garantie des résultats.

### SCHÉMA DE PRINCIPE DE FONCTIONNEMENT DU PROCÈDE APPLIQUE À LA TRAÇABILITE Voir Figure I

Le schéma en figure 1 illustre comment le procédé permet de caractériser les différentes étapes ou opérations précédemment effectuées, à partir d'un simple marquage en direct ou sur une étiquette placée sur l'objet ou produit.

### DÉTAIL DU CADRE APPLIQUE A LA TRAÇABILITE Voir Figure 2

Le cadre de traçabilité se compose d'une surface délimitée par un pourtour d'identification qui permet de le distinguer facilement à l'oeil et en traitement automatique. Il peut être caractéristique d'un processus ou d'un domaine.
1- Ce pourtour enserre la juxtaposition de plusieurs zones de fonctions différentes :
   La zone Z1 composée de symboles alphanumériques classiques, de graphismes, dessins et images destinés à la communication directe avec l'utilisateur.
   La zone Z2 comporte plusieurs lignes de caractères codés type DOTE par exemple.
   La première ligne est l'identifiant du cadre. Il permet son identification unique et fournit certains renseignements généraux comme la date, la filière, la table de traçabilité correspondante, le lieu, une description de l'objet. etc....
   Les lignes suivantes constituent les «traceurs» à raison d'une ligne par niveau, étape ou opération. Le traceur permet de retrouver l'historique du produit par l'intermédiaire de liens et d'une table de traçabilité.
   La zone de contrôle Z3 peut servir principalement de support d'informations confidentielles. Elle peut comporter aussi des témoins de situation (témoins de passage thermiques par exemple), des clés publiques visibles ou pas.
   *Cette zone, notamment, peut contenir en clair ou en caractères codés (exemple DOTE) une référence (par exemple un numéro) individuelle chiffrée du marquage direct ou sur une étiquette.*
   *La clé de chiffrement correspondant, gardée secrète par le fabricant, permet de détecter toute reproduction illicite. En l'absence de la connaissance de la clé de chiffrement, le marquage frauduleux ne peut être fait qu'à l'identique.*
   *La lecture de 2 étiquettes suffit à détecter la fraude.*
   *Il est à noter qu'un caractère DOTE, par exemple permet de représenter un octet sous une faible surface. Ainsi 4 caractères permettent de représenter un nombre variable pouvant caractériser jusqu'à*: 2**32 # 2 294 900 000 éléments.
2- Les lignes de caractères peuvent être scellées, chiffrées, partiellement ou en totalité- indépendamment les unes des autres,. Elles peuvent être de hauteur et de taille différentes, et composer des motifs, cadres ou enveloppes variés.
   Les lignes peuvent être de couleurs différentes (fond comme caractères).
3- Les lignes codées ( par exemple DOTE) du traceur pointent aussi sur la ou les tables de traçabilité. Ces dernières peuvent être adressées directement par les caractères pointeurs contenus dans le traceur ou indirectement via des tables intermédiaires spécifiques, éventuellement standardisées.
4- Les tables de traçabilité permettent :
   - d'exprimer sous forme de textes un premier niveau d'information directement lié à l'objet portant le cadre de traçabilité; notamment les origines, les certifications et contrôles .. Ces textes sont stockés dans la table informations internes).
   - de pointer sur différents opérateurs ou organismes de certification ou de contrôle par exemple, qui sont détenteurs d'informations complémentaires qui préciseront l'historique du produit si l'utilisateur le souhaite (informations externes).
   - de pointer sur les fournisseurs dans le cas de produits non certifiés et non contrôlés.
   - Au sein des tables de traçabilité, les informations concernant les fournisseurs, par exemple, peuvent être détaillées et en partie confidentielles si cela est souhaité.
   - Les tables de traçabilité sont adaptées à chaque domaine. Ainsi un champ peut avoir une signification différente suivant le domaine d'application.

**La première ligne ou IDENTIFIANT.est constituée des Informations qui caractérisent :**
- **l'étiquette (chaque étiquette est différente) et**
- **l'information sur le produit (rattachement de l'étiquette au produit).**
- **Définit la table de traçabilité associée (éventuellement la table intermédiaire).**

L'identifiant se décompose comme suit :

| | | *Nb d'octets* |
|---|---|---|
| 1- Index d'**authentification.** | Symbole **241** | **1** |
| • N° d'authentification, nombre sur 4 octets (> 4 milliards) | | **4** |
| | | |
| 2 Index de **date.** de l'étiquetage. | Symbole **242.** | **1** |
| • Date. Ex.2 octets / minutes, 2 octets / jours. | **4** | |
| | | |
| 3- Index de **lieu. de l'étiquetage.** | Symbole **243.** | **1** |
| • Lieu, 1 octet pour le pays et 2 octets pour la région. | | **3** |
| | | |
| 4- Index de **filière.du** produit. | Symbole **244.** | **1** |
| • N° de la filière (256 possibilités), désigne aussi le *jeu de tables* correspondant, pour l'explicitation des champs... | | **1** |
| | | |
| 5- Index de **phase** (info sur le processus) | Symbole **245** | **1** |
| • Phase ou rang du cadre. ( 1er ou n ièm). 4 bits rang max, 4 bits rang réel. Donne une idée sur «ce qui suit». REM : peut fournir des informations sur la certification et le contrôle. | | **1** |
| | | |
| 6- Index unité de **mesure/matière/composants.** | Symbole **246** | **1** |
| • Caractérise le produit ; rattachement objet/étiquette. 8 octets, un par principal composant ou description (via la table de traçabilité). | | **8** |
| | | |
| 7- Index de **signature** | Symbole **240** | **1** |
| | | **33** |
| Caractères Début et Fin de ligne de caractères DOTE | | **2** |
| | | |
| **TOTAL :** *7 index ou classes soit* | | ***35 octets*** |

### B- TRACEURS/OPÉRATIONS. Une ligne par opération ou niveau.

Certaines de ces données peuvent être chiffrées.

| | | *Nb d'octets* |
|---|---|---|
| 1- index **date de l'opération** | Symbole **242** | **1** |
| Date de l'opération : 7bits pour l'année + 9 bits pour le jour | | **2** |
| | | |
| 2- Index **du «responsable» de ce produit** | Symbole **250** | **1** |
| 1 octet pour le pays, 2 octets pour les ref. du fournisseur responsable. | | **3** |
| | | |
| 3- Index **produit départ** | Symbole **248** | **1** |
| Définit le type du lot auquel appartient l'objet ou le produit (256 possibilités) | | **1** |
| | | |
| 4- Index **type d'opération** de cette ligne. | Symbole **247.1** | |
| Désigne le type d'opération (via la table précisée dans l'identifiant) | | **2** |
| | | |
| 5- Index **LOT(s)** | Symbole **249** | **1** |
| • Lot (désignation) | | **3** |
| • Nombre de composants dans les produits du lot | | **1** |
| • Quantification du contenu du lot : 1 octet/unité, 2 octets/quantité. | | **3** |
| • Qualité du lot (256 valeurs). | | **1** |
| • Adresse du lot ou lien externe pointant sur la base de données du du ou des responsables des opérations précédentes. *et ainsi de suite pour chaque composant.* *Chaque responsable d'opération tient à jour une table de liens reliant tous les responsables des opérations précédentes.* | | **3** |
| | | |
| 6- Index **certification/Contrôle.** | Symbole **251** | **1** |
| Coordonnées du certificateur et du contrôleur 1 octet chacun (via la table). | | **2** |
| | | |
| 7- Index **signature.** | Symbole **240** | **1** |
| | Scellement ou Signature | **5** |
| | | **33** |
| Caractères Début et Fin de ligne de caractères DOTE | | **2** |
| | | |
| **TOTAL :** 7 index ou classes | et | **35 *octets*** |

### C- TÉMOINS.

Dans l'exemple figure 2 la zone3 peut servir de témoin thermique par exemple.

### EXEMPLE de cadre de traçabilité : «'ÉTIQUETTE» attachée à un produit.

Voir figure 2 :

La zone Z1 est réservée aux notations alphanumériques destinées à la lecture humaine. Dans l'exemple le partie marquée 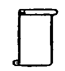

La zone Z2 est réservée à la lecture automatique par crayon, douchette ou caméra. Elle est constituée de l'Identifiant 1, et des marqueurs 2.

La zone Z3 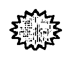
comporte éventuellement des témoins de traitements ou des informations spécifiques comme des clés, par exemple.

Le cadre de traçabilité 3 englobe l'ensemble. Sa forme et ses couleurs sont caractéristiques du produit et de la filière ou marque de ce dernier.

## Revendications

1. Dispositif de traçage des caractéristiques des opérations effectuées sur des composants d'un objet ou produit tout au long de leur vie depuis l'origine, comportant un groupement particulier de dessins, d'écritures codées et d'images effectués directement sur l'objet ou sur un support intermédiaire fixé à l'objet ou produit, pour composer un cadre de traçabilité, tel que ce cadre (3) comporte une zone (Z2) de champs de caractères codés comportant un identifiant (1) assurant l'identification unique du cadre de traçabilité (3) et garantissant son rattachement à l'objet ou produit par des informations spécifiques à l'objet ou produit, et **caractérisé en ce que** cet identifiant (1) affecte à chaque cadre de traçabilité au moins une table d'extension d'informations propres à chaque domaine d'application et servant à expliciter les champs du cadre de traçabilité et à réduire les volumes d'informations à mémoriser sur l'objet.

2. Dispositif de traçage selon la revendication 1, **caractérisé en ce qu'**il est solidaire physiquement de l'objet et visible de l'extérieur, **en ce qu'**il différencie un objet d'un autre par au moins un nombre, et **en ce qu'**il comporte des écritures codées scellées, chiffrées et suffisamment contrastées pour être exploitées par un dispositif de saisie d'images.

3. Dispositif de traçage selon la revendication 1 ou 2, **caractérisé en ce que** le cadre de traçabilité comprend la juxtaposition de plusieurs zones (Z1, Z2, Z3) de structure et de signification différentes, à savoir :
- une zone (Z1) destinée à l'opérateur comportant des écritures classiques et des dessins ;
- la zone de caractères codées (Z2) destinée à l'acquisition automatique ;
- une zone de contrôle (Z3) comportant des témoins relatifs à l'état de l'objet et des informations confidentielles ou d'utilisation particulière.

4. Dispositif de traçage selon l'une des revendications 2 ou 3 lorsque le dispositif de la revendication 3 est selon la revendication 2, **caractérisé en ce que** le nombre différenciant un objet d'un autre est choisi entre une référence chiffrée propre à chaque cadre de traçabilité et un nombre incrémenté à chaque objet.

5. Dispositif de traçage selon l'une quelconque des revendications précédentes, dans lequel la zone de caractères codés (Z2) comporte des traceurs (2) correspondant chacun à une ligne de codes du cadre de traçabilité, chaque traceur précisant les caractéristiques d'une opération sur l'objet ou le produit et contenant les liens de recherche automatique par pointage sur une source d'informations extérieure au cadre de traçabilité via des moyens de transferts, servant à reconstituer de proche en proche l'arborescence de la vie de l'objet ou produit.

6. Dispositif de traçage selon l'une quelconque des revendications précédentes, dans lequel le cadre de traçabilité est délimité par une enveloppe de forme et de type appropriés à son extraction d'une image complète de l'objet par traitement d'un signal d'image.

7. Dispositif de traçage selon l'une quelconque des revendications précédentes, dans lequel le cadre de traçabilité (3) contient au moins une clé inscrite dans la zone de contrôle (Z3) qui permet un rattachement exclusif de ce cadre à un document d'accompagnement de l'objet ou du produit, le cadre et le document devenant ainsi indissociables pour garantir l'information associée à l'objet ou au produit.

## Claims

1. A device for tracing the characteristics of the operations carried out on the components of an object or a product along the lives thereof, from the origin, including a particular group of drawings, encoded writings and images directly realized on the object or an intermediate support fixed to the object or the product, so as to make a traceability frame, so that such frame (3) includes an area (Z2) of encoded character fields including one identifier (1) securing the unique identification of the traceability frame (3) and securing the matching thereof with the object or the product by means of information specific to the object or the product, and **characterized in that** such identifier (1) assigns to each traceability frame at least one extension table of information specific to each field of application and used for explaining the fields of the traceability frame and reducing the volumes of information to be stored in memory about the object.

2. A tracing device according to claim 1, **characterized in that** it is physically solid with the object and visible from the outside, **in that** it differentiates one object from another by means of at least one number, and **in that** it includes sealed, encoded and ciphered writings which have enough contrast to be used by an image capturing device.

3. A tracing device according to claims 1 or 2, **characterized in that** the traceability frame comprises the juxtaposition of several areas (Z1, Z2, Z3) having different structures and meanings, i.e.:
- one area (Z1) intended for the operator, including conventional writings and drawings;
- the encoded character area (Z2) intended for the automatic acquisition;
- a check area (Z3) including controls relating to the condition of the object and confidential information or information for a special utilization.

4. A tracing device according to claims 2 or 3, when the device of claim 3 exists according to claim 2, **characterized in that** the number differentiating one object from another is selected between a figure reference specific to each traceability frame and a number incremented for each object.

5. A tracing device according to any one of the preceding claims, wherein the encoded character area (Z2) includes tracers (2) each corresponding to a line of codes in the traceability frame, each tracer mentioning precisely the characteristics of an operation carried out on the object or the product and containing the links for the automatic search through the aiming at a source of information outside the traceability frame, via transfer means used for gradually reconstructing the tree of the life of the object or the product.

6. A tracing device according to any one of the preceding claims, wherein the traceability frame is defined by an envelope having a shape and a type suitable for the retrieval of a complete image of the object, through a processing of an image signal.

7. A tracing device according to any one of the preceding claims, wherein the traceability frame (3) contains at least one key inscribed in the check area (Z3) which enables an exclusive matching of such frame with a document enclosed with the object or the product, the frame and the document thus becoming inseparable from each other to secure the information associated with the object or the product.

## Patentansprüche

1. Vorrichtung zum Zeichnen der Merkmale der Vorgänge, die an Komponenten eines Objekts oder Produkts im Laufe ihrer Lebensdauer ab dem Ursprung vorgenommen worden sind, die eine besondere Gruppe Zeichnungen, codierte Schriften und Bilder umfaßt, die direkt auf dem Objekt oder einem am Objekt oder Produkt befestigten Zwischenträger durchgeführt worden sind, um einen Rahmen für die Rückverfolgbarkeit zusammenzustellen, so daß dieser Rahmen (3) eine Zone (Z2) mit Feldern mit codierten Zeichen umfaßt, die eine Kennung (1) umfaßt, die die einzige Identifizierung des Rückverfolgbarkeitsrahmens (3) sicherstellt und seine Zugehörigkeit zum Objekt oder Produkt durch objektspezifische oder produktspezifische Informationen garantiert, **dadurch gekennzeichnet, daß** diese Kennung (1) jedem Rückverfolgbarkeitsrahmen mindestens eine Erweiterungstabelle mit Informationen zuordnet, die jedem Anwendungsbereich eigen sind und dazu dienen, die Felder des Rückverfolgbarkeitsrahmens zu erklären und die auf dem Objekt zu speichernden Informationsvolumen zu reduzieren.

2. Vorrichtung zum Zeichnen nach Anspruch 1, **dadurch gekennzeichnet, daß** sie physisch fest mit dem Objekt verbunden und von außen sichtbar ist, daß sie ein Objekt von einem anderen durch mindestens eine Zahl unterscheidet, und daß sie codierte versiegelte, chiffrierte und ausreichend kontrastierte Schriften umfaßt, daß sie von einer Vorrichtung für die Eingabe von Bildern genutzt werden können.

3. Vorrichtung zum Zeichnen nach einem beliebigen der vorstehenden Ansprüche 1 oder 2, **dadurch gekennzeichnet, daß** der Rückverfolgbarkeitsrahmen das Nebeneinanderlegen mehrerer Zonen (Z1, Z2, Z3) verschiedener Struktur und Bedeutung umfaßt, nämlich:
- Eine Zone (Z1), die für den Bediener bestimmt ist und klassische Schriften und Zeichnungen umfaßt;
- Eine Zone mit codierten Zeichen (Z2), die für die automatische Erfassung bestimmt ist;
- Eine Kontrollzone (Z3), die Zeugen bezüglich des Zustands des Objekts und vertrauliche oder für besondere Benutzung bestimmte Informationen umfaßt.

4. Vorrichtung zum Zeichnen nach einem beliebigen der vorstehenden Ansprüche 2 oder 3, wenn die Vorrichtung des Anspruchs 3 nach dem Anspruch 2 ist, **dadurch gekennzeichnet, daß** die Zahl, die ein Objekt von einem anderen unterscheidet, zwischen einer jedem Rückverfolgungsrahmen eigenen chiffrierten Referenz und einer an jedem Objekt inkrementierten Zahl gewählt wird.

5. Vorrichtung zum Zeichnen nach einem beliebigen der vorstehenden Ansprüche, **dadurch gekennzeichnet, daß** die Zone mit codierten Zeichen (Z2) Zeichengeräte (2) umfaßt, die jeweils einer Codezeile des Rückverfolgungsrahmens entspricht, wobei jedes Zeichengerät die Merkmale eines Vorgangs am Objekt oder Produkt präzisiert, und die Links für die automatische Suche durch Vergleich mit einer Informationsquelle außerhalb des Rückverfolgungsrahmens über Transfermittel enthält, die dazu dienen, durch Annäherung den Baumaufbau des Lebens des Objekts oder Produkts zu rekonstruieren.

6. Vorrichtung zum Zeichnen nach einem beliebigen der vorstehenden Ansprüche, **dadurch gekennzeichnet, daß** der Rückverfolgungsrahmen durch eine Hülle geeigneter Form und Typs für die Extraktion eines kompletten Bildes durch Verarbeitung eines Bildsignals abgegrenzt wird.

7. Vorrichtung zum Zeichnen nach einem beliebigen der vorstehenden Ansprüche, **dadurch gekennzeichnet, daß** der Rückverfolgungsrahmen (3) zumindest einen in der Kontrollzone (Z3) eingetragenen Schlüssel enthält, mit dem dieser Rahmen exklusiv an ein Begleitdokument des Objekts oder Produkts gebunden werden kann, wobei der Rahmen und das Dokument somit untrennbar werden, damit die mit dem Objekt oder Produkt verbundene Information garantiert wird.
